# EUROPÄISCHE PATENTSCHRIFT

(11) **EP 2 253 497 B1**
(45) Veröffentlichungstag und Bekanntmachung des Hinweises auf die Patenterteilung: **03.04.2019**
(21) Anmeldenummer: 10005023.6
(22) Anmeldetag: 12.05.2010
(51) Int. Cl.: B60J 7/12, B60J 7/00

(54) **Verdeckgestänge für ein Faltdach eines Personenkraftwagens**
Canopy rod for a collapsible roof of a passenger vehicle
Tige de capote pour un toit escamotable d'une véhicule

(30) Priorität: 20.05.2009 DE 102009022195
(43) Veröffentlichungstag der Anmeldung: 24.11.2010
(73) Patentinhaber: AUDI AG, 85045 Ingolstadt (DE)
(72) Erfinder: Just, Jan, Bloomfield Hills, MI 48301 (US); Schwarzer, Michael, Dipl.-Ing. (FH), 70469 Stuttgart (DE)
(74) Vertreter: Engelhardt, Harald

(56) Entgegenhaltungen:
- EP-A2- 2 221 203
- US-A- 5 004 291
- US-A- 5 848 819
- US-A1- 2004 189 041

## Beschreibung

Die Erfindung bezieht sich auf ein Verdeckgestänge für ein Faltdach eines Personenkraftwagens, nach dem Oberbegriff des Patentanspruchs 1.

Es ist ein bewegliches Dach für einen Personenkraftwagen bekannt, US 5,004,291, der seitliche Dachrahmen besitzt, welche Dachrahmen im vorderen Bereich mit einer Dachkappe verbunden sind. Die aus formsteifem Werkstoff bestehende Dachkappe verläuft entlang eines oberen quer zur Fahrzeuglängsrichtung ausgerichteten Rahmens, der Bestandteil eines Windschutzscheibenrahmens ist. Jeder seitliche Dachrahmen ist unter Vermittlung von Schrauben an der Dachkappe gehalten.

Aus der DE 296 07 114 U1 geht ein Cabriolet-Fahrzeug hervor, dessen eine faltbare Verdeckhaut tragendes Verdeckgestell mit Seitenrahmenteilen versehen ist. Hierbei bildet jedes vordere Seitenrahmenteil mit einem vorderen quer zur Fahrzeuglängsrichtung sich erstreckenden- Dachspitzenteil einen Verbund, welches Dachspitzenteil benachbart einem oberen Windschutzscheibenrahmenabschnitt verläuft. Das Verdeckgestell ist als ein aus Strangpressprofilteilen bestehendes Leichtbautragwerk ausgebildet.

Es ist Aufgabe der Erfindung, ein Verdeckgestänge für ein Faltverdeck eines Personenkraftwagens so auszulegen, dass es sich einfach realisieren und herstellen lässt und dabei eine gute Funktion mit hoher Standfestigkeit aufweist.

Die mit der Erfindung hauptsächlich erzielten Vorteile sind darin zu sehen, dass die vorderen und hinteren Gestängelenker des Verdeckgestänges auf aufwandsarme Weise mit der Dachkappe bzw. untereinander verbunden sind, und zwar unter Vermittlung von Schrauben. Diese Auslegung schafft ein gebautes Verdeckgestänge, das konstruktive Freiheitsgrade schafft sowie bei guter Festigkeit und Bewegungfähigkeit über eine hohe Standfestigkeit verfügt. Die Gestängelenker bestehen z.B. aus einer Leichtmetall Legierung und die Lagerhebel aus einem eisenmetallischen Werkstoff, wodurch für diese Bauteile eine Werkstoffpaarung eingesetzt wird, die musterhafte Voraussetzungen für ein Verdeckgestänge eines Faltdachs bietet. Schließlich ist auch noch hervorzuheben, dass die Gestaltung der Verdeckgestänge zur Gewichtsoptimierung des Faltdachs beiträgt und neben ihren eigentlichen Dachform verleihenden und Faltdach betätigenden Aufgaben die Möglichkeit bietet, ein oder mehrere Dichtkörper aufzunehmen.

In der Zeichnung wird ein Ausführungsbeispiel der Erfindung gezeigt, das nachstehend näher beschrieben wird.

Es zeigen
Fig. 1 eine Schrägansicht von hinten links auf einen Personenkraftwagen mit einem Faltdach,
Fig. 2 eine Schrägansicht von hinten links oben auf das eine Dachkappe aufweisende Faltdach gemäß Fig. 1,
Fig,3 eine Schrägansicht von hinten rechts unten auf eine Innenseite der Dachkappe gemäß Fig. 2,

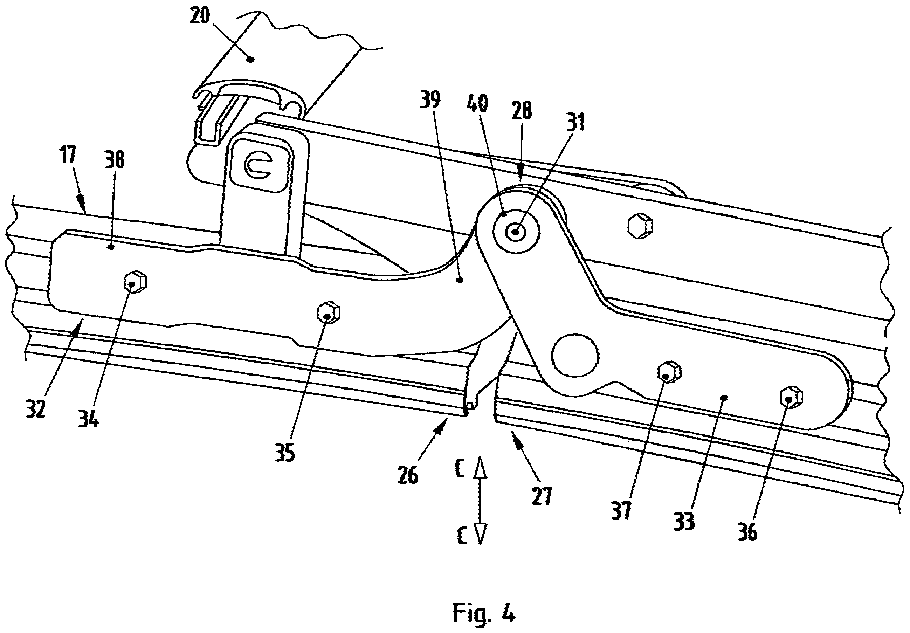

Fig. 4 eine Ansicht etwa in Pfeilrichtung X der Fig. 3,
Fig. 5 einen Schnitt nach der Linie V-V der Fig. 2,
Fig. 6 einen Schnitt nach der Linie VI-VI der Fig. 2,
Fig. 7 eine Ansicht entsprechend Fig. 6, jedoch in schematischer Darstellung.

Ein Personenkraftwagen 1 weist einen von Rädern 2 und 3 getragenen Aufbau 4 auf, der einen Grundkörper 5 mit Türen 6, einem Windschutzscheibenrahmen 7 und einer Heckklappe 8 besitzt. Am Aufbau 4 bzw. Grundkörper 5 ist ein Faltdach 9 gelagert, das zwischen einer einen Fahrgastraum Fg überspannenden Schließstellung Sehst und einer In einem Heckraum Hr ablegbaren Offenstellung -nicht gezeigt- bewegbar ist. Das Faltdach 9 umfasst einen flexiblen Verdeckbezug 10, der sich in der Schließstellung vom Windschutzscheibenrahmen 7 bis zu einem hinteren Abschnitt 11 einer Gürtellinie 12 erstreckt. In den Verdeckbezug 10, der zumindest bereichsweise auf einer dem Fahrgastraum Fg zugewandten Seite mit einer Innenverkleidung 13 versehen ist, ist in einem rückwärtigen Bereich Br eine Heckscheibe 14 integriert. Die Heckscheibe 14 besteht bspw. aus Glas und verläuft entgegen Fahrtrichtung A betrachtet schräg von oben nach unten.

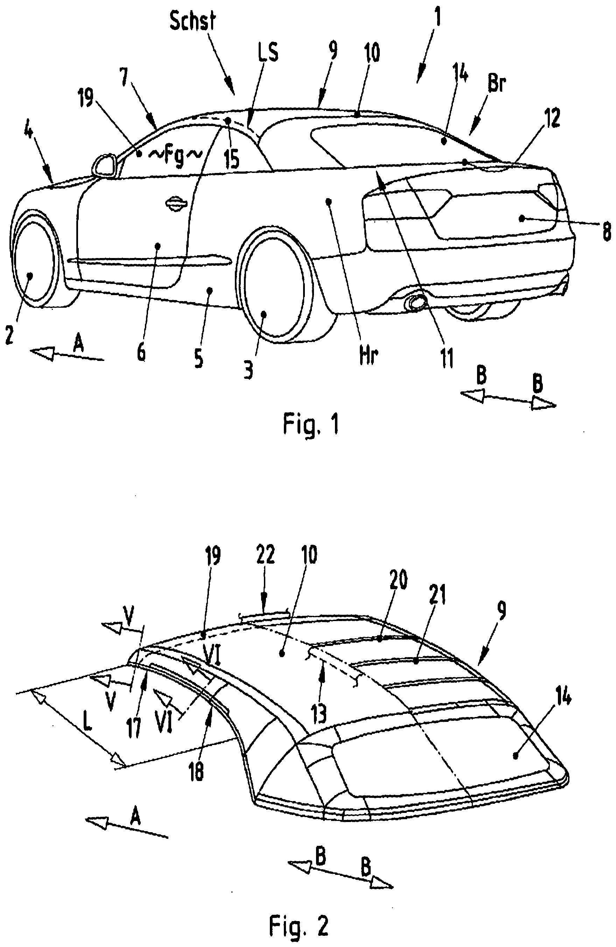

Der Verdeckbezug 10 wird von einem Verdeckgestänge 15 getragen, das an Längsseiten LS des Faltdachs 9 Querschnittsprofile 16 aufweisende vordere Gestängelenker 17 und hintere Gestängelenker 18 besitzt. Letztere erstrecken sich in Fahrzeuglängsrichtung B-B und sind hintereinander liegend angeordnet Zwischen den gegenüberliegenden Gestängelenkern 17 unterstützen eine Dachkappe 19 -Fig. 2- und mehrere quer zur Fahrzeuglängsrichtung B-B verlaufende Spriegel -z.B. 20 und 21- den Verdeckbezug 10. Die Gestängelenker 17 -und auch die Dachkappe 19-bestehen aus Leichbauwerkstoff wie Kunststoff, Leichtmetall oder dgl. und können z.B. im Strangpressverfahren hergestellt sein. Die flächige Dachkappe 19 ist ein formsteifes Bauteil und schließt an einen oberen Querträger 22 -Fig. 2- des Windschutzscheibenrahmens 7 an. Eine Außenseite 23 der Dachkappe 19 ist glatt ausgeführt und eine Innenseite 24 von letzterer ist zur Versteifung von ihr mit Verstärkungsstegen 25 versehen, die nach Art eines Gitterwerks zueinander angeordnet sind.

An einander zugekehrten Endbereichen 26 und 27 der Gestängelenker 17 und 18 wirken diese Gestängelenker 17 und 18 unter Vermittlung von Drehlagern 28 zusammen, dergestalt, dass die Gestängelenker 17 und 18 relativbeweglich zueinander sind. Die vorderen Gestängelenker 17 sind mittels erster Schrauben 29 und 30 mit der Dachkappe 19 verbunden.

Jedes Drehlager 28 wird durch einen Lagerzapfen 31 und einen ersten Lagerhebel 32 sowie einen zweiten Lagerhebel 33 gebildet, die als separate Einzelteile, d.h. getrennt von den Gestängelenkern 17 und 18, hergestellt sind. Der erste Lagerhebel 32 ist unter Vermittlung von zweiten Schrauben 34 und 35 mit dem vorderen Gestängelenker 17 verbunden; der zweite Lagerhebel 32 unter Vermittlung von dritten Schrauben 36 und 37.

Jeder Lagerhebel -bspw, 32- ist als zweiarmiger Hebel gestaltet, und er ist mit einem Befestigungsarm 38 und einem Lagerarm 39 für das Drehlager 28 versehen. In den Lagerarm 39 ist eine Bohrung 40 für den quer zur Fahrzeuglängsrichtung B-B ausgerichteten Lagerzapfen 31 eingearbeitet; der zweite Lagerhebel 33 ist ähnlich ausgeführt, so dass die ersten und zweiten Lagerhebel 32 und 33 Gleichteile sein können. Der Lagerarm 39 des ersten Lagerhebels 32 ist gegenüber dem Befestigungsarm 38 abgekröpft, derart dass das Drehlager 28 bzw. der Lagerzapfen 31 in Fahrzeughöhenrichtung C-C gesehen oberhalb der Gestängelenker 17 und 18 liegen. Im Ausführungsbeispiel bestehen die Gestängelenker 17 und 18 aus einer Leichtmetall-Legierung und die Lagerhebel 32 und 33 aus eisenmetallischem Werkstoff. Es ist aber auch denkbar, andere Werkstoffpaarungen, bspw. Kunststoff und Metall, einzusetzen.

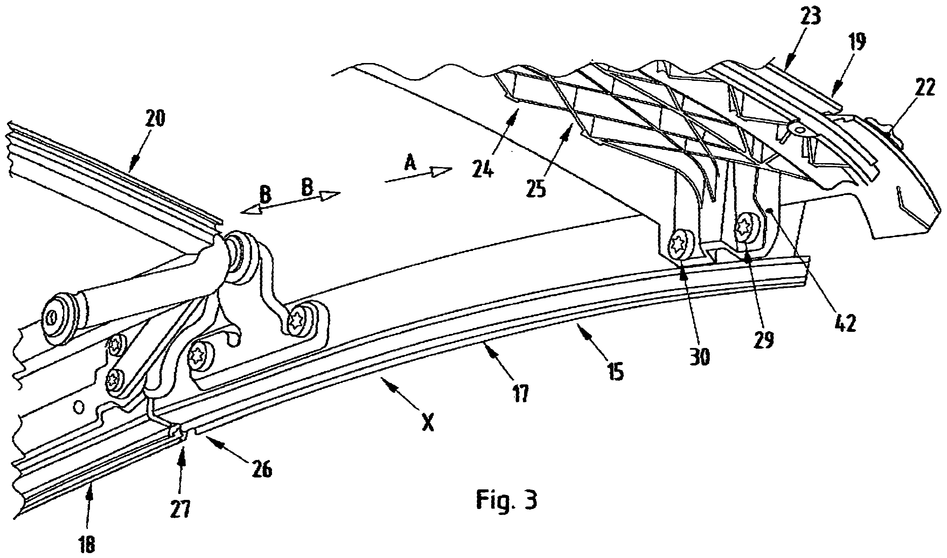

In Fig. 3, die eine nicht beanspruchte Ausführungsform offenbart, wird gezeigt, dass zwischen den vorderen Gestängelenkern 17 und der Dachkappe 19 erste aufrechte Haltekonsolen 42 vorgesehen sind, die zur Befestigung der Gestängelenker 17 an der Dachkappe 19 dienen. Diese Haltekonsolen 42 sind aus einem Stück mit der Dachkappe 19 hergestellt. Zwischen Haltekonsolen 42 und den Gestängelenkern 17 sind die ersten Schrauben 29 und 30 wirksam.

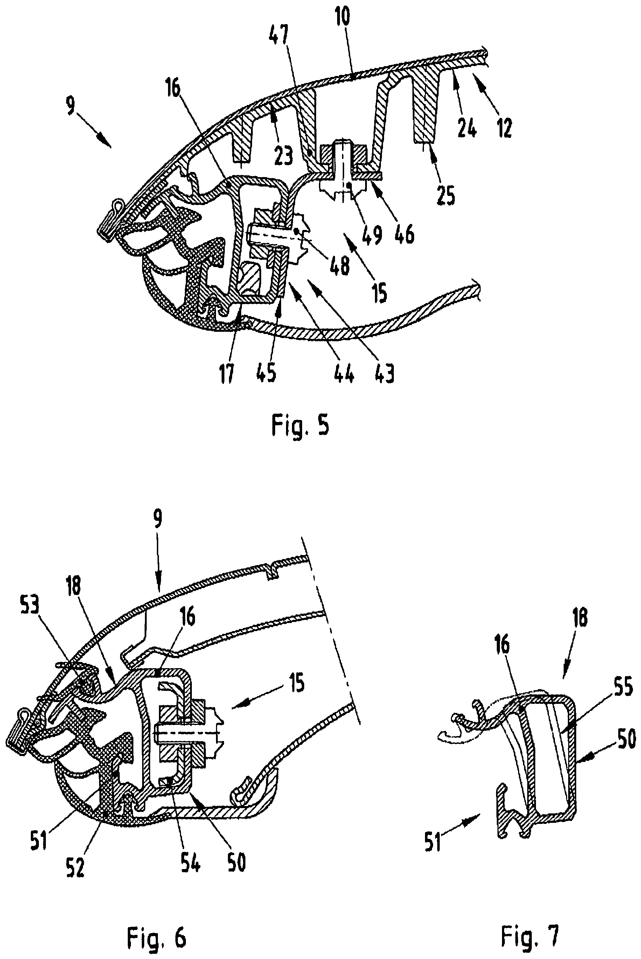

Gemäß Fig. 5 ist eine Haltekonsole 43 aus Metall, Kunststoff oder dgl. zwischen der Dachkappe 19 und dem vorderen Gestängelenker 17 als ein Winkelprofil 44 ausgebildet, das einen aufrechten Profilsteg 45 und einen horizontalen Profilsteg 46 besitzt. Der aufrechte Profilsteg 45 trägt den zugehörigen vorderen Gestängelenker 17, und der horizontale Profilsteg 46 stützt eine Befestigungserweiterung 47 der Dachkappe 19 ab. Dabei sind der aufrechte Profilsteg 45 und der horizontale

Profilsteg 46 unter Vermittlung von Schrauben 48 und 49 mit dem vorderen Gestängelenker 17 bzw. der Dachkappe 19 verbunden.

Nach Fig. 6 ist der hintere Gestängelenker 18 -auch der vordere Gestängelenker 17 - mit einem Rohrabschnitt 50 und einem Halteabschnitt 51 versehen. Der Halteabschnitt 51 nimmt Dichtkörper 52 und 53 des Faltdachs 9 auf, wogegen an dem Rohrabschnitt 50 Anbauteile 54 des Verdeckgestänges 15 befestigt sind.

Schließlich gibt die Fig. 7 wieder, dass die Gestängelenker 17 oder 18 über eine Länge L -in Fahrzeuglängsrichtung B-B betrachtet- eine Schränkung 55 aufweisen und in einem Bogen 56 -Fig. 2- verlaufen.

## Patentansprüche

1. Verdeckgestänge für ein Faltdach eines Personenkraftwagens, umfassend an Längsseiten des Faltdachs angebrachte vordere Gestängelenker (17) und hintere Gestängelenker (18) aus Strangpressprofilen, die relativbeweglich an einander zugekehrten Endbereichen (26 und 27) unter Vermittlung von Drehlagern (28) zusammenwirken, welche vorderen Gestängelenker benachbart eines oberen Querträgers (22) eines einen Bestandteil eines Aufbaus bildenden Windschutzscheibenrahmens (7) mit einer sich quer zur Fahrzeuglängsrichtung erstreckenden Dachkappe (19) verbunden sind, wobei die Dachkappe und die Gestängelenker (17 und 18) aus Leichtbauwerkstoff bestehen, wobei die vorderen Gestängelenker (17) unter Vermittlung von ersten Schrauben (29 und 30) an der Dachkappe (19) gehalten sind und die Gestängelenker (17 und 18) an den Endbereichen (26 und 27) unter Zwischenschaltung von getrennt von den besagten Gestängelenkern (17 und 18) hergestellten die Drehlager (28) aufweisenden Lagerhebeln (32 und 33) gehalten sind, wobei zwischen den vorderen Gestängelenkern (17) und der Dachkappe (19) Haltekonsolen (43) vorgesehen sind, die zur Befestigung dieser Gestängelenker (17) an besagter Dachkappe (19) dienen,
**dadurch gekennzeichnet,**
**dass** die Haltekonsolen (43) jeweils ein Winkelprofil (44) umfassen, das einen aufrechten Profilsteg (45) und einen horizontalen Profilsteg (46) aufweist, wobei der aufrechte Profilsteg (45) den zugehörigen vorderen Gestängelenker (17) trägt, wogegen der horizontale Profilsteg (46) eine Befestigungserweiterung (47) der Dachkappe (19) abstützt.

2. Verdeckgestänge nach Anspruch 1,
**dadurch gekennzeichnet,**
**dass** die Lagerhebel (32 und 33) unter Vermittlung von zweiten Schrauben (34 und 35) und dritten Schrauben (36 und 37) an den vorderen Gestängelenkern (17) und den hinteren Gestängelenkern (18) in Lage gehalten werden.

3. Verdeckgestänge nach den Ansprüchen 1 und 2,
**dadurch gekennzeichnet,**
**dass** die Lagerhebel (32 und 33) als zweiarmige Hebel ausgebildet sind.

4. Verdeckgestänge nach Anspruch 3,
**dadurch gekennzeichnet,**
**dass** die Lagerhebel (32 und 33) Befestigungsarme (38) und Lagerarme (39) für die Drehlager (28) aufweisen.

5. Verdeckgestänge nach den Ansprüchen 1, 3 und 4,
**dadurch gekennzeichnet,**
**dass** die Lagerarme (39) gegenüber den Befestigungsarmen (38) abgekröpft sind.

6. Verdeckgestänge nach einem oder mehreren der vorangehenden Ansprüche,
**dadurch gekennzeichnet,**
**dass** die Drehlager (28) - in Fahrzeughöhenrichtung (C-C) gesehen - oberhalb der vorderen Gestängelenker (17) und hinteren Gestängelenker (18) angeordnet sind.

7. Verdeckgestänge nach einem oder mehreren der vorangehenden Ansprüche,
**dadurch gekennzeichnet,**
**dass** die Gestängelenker (17 und 18) aus Leichtmetall und die Lagerhebel (33 und 34) aus einem eisenmetallischen Werkstoff bestehen.

8. Verdeckgestänge nach einem der vorangehenden Ansprüche,
**dadurch gekennzeichnet,**
**dass** die Haltekonsolen (42) aus einem Stück mit der Dachkappe (19) hergestellt sind.

9. Verdeckgestänge nach einem der vorangehenden Ansprüche,
**dadurch gekennzeichnet,**
**dass** der aufrechte Profilsteg (45) und der horizontale Profilsteg (46) unter Vermittlung von einer oder mehreren Schrauben (48 und 49) mit dem vorderen Gestängelenker (17) bzw. mit der Dachkappe (19) verbunden ist.

10. Verdeckgestänge nach einem oder mehreren der vorangehenden Ansprüche,
**dadurch gekennzeichnet,**
**dass** jeder Gestängelenker (z. B. 18) einen Rohrabschnitt (50) und einen einen oder mehrere Dichtkörper (52 und 53) aufnehmenden Halteabschnitt (51) umfasst.

11. Verdeckgestänge nach Anspruch 10,
**dadurch gekennzeichnet,**
**dass** die Gestängelenker (17 und 18) über ihre Länge (L) betrachtet zumindest abschnittsweise mit einer Schränkung (55) versehen sind.

12. Verdeckgestänge nach Anspruch 10,
**dadurch gekennzeichnet,**
**dass** die Gestängelenker (17 und 18) über ihre Länge (L) betrachtet in einem Bogen (56) verlaufen.

## Claims

1. Hood frame for a folding roof of a passenger vehicle, comprising front frame links (17) and rear frame links (18) made from extrusion press profiles attached at longitudinal sides of the folding roof, which cooperate in a relatively-movable manner at end regions (26 and 27) turned towards one another with arrangement of pivot bearings (28) which front frame links are connected to a roof cover (19) extending transversal to the vehicle longitudinal direction adjacent to an upper transverse beam (22) of a windscreen frame (7) forming a component of a structure, wherein the roof cover and the frame links (17 and 18) consist of lightweight material, wherein the front frame links (17) are held on the roof cover (19) with arrangement of first screws (29 and 30) and the frame links (17 and 18) are held at the end regions (26 and 27) with interposition of bearing struts (32 and 33) comprising the pivot bearings (28) manufactured separately from the mentioned frame links (17 and 18), wherein retaining brackets (43) are provided between the front frame links (17) and the roof cover (19), said retaining brackets serving to fasten these frame links (17) to the mentioned roof cover (19), **characterised in that** the retaining brackets (43) each comprise an angular profile (44), which has a straight profile web (45) and a horizontal profile web (46), wherein the straight profile web (45) supports the associated front frame links (17), whereas the horizontal profile web (46) supports a fastening expansion (47) of the roof cover (19).

2. Hood frame according to claim 1,
**characterised in that**
the bearing struts (32 and 33) are held in position on the front frame links (17) and the rear frame links (18) with arrangement of second screws (34 and 35) and third screws (36 and 37).

3. Hood frame according to claims 1 and 2,
**characterised in that**
the bearing struts (32 and 33) are designed as two-armed levers.

4. Hood frame according to claim 3,
**characterised in that**
the bearing struts (32 and 33) have fastening arms (38) and bearing arms (39) for the pivot bearings (28).

5. Hood frame according to claims 1, 3 and 4,
**characterised in that**
the bearing arms (39) are offset with respect to the fastening arms (38).

6. Hood frame according to any one of or several of the preceding claims,
**characterised in that**
the pivot bearings (28), viewed in the vehicle vertical direction (C-C), are arranged above the front frame links (17) and rear frame links (18).

7. Hood frame according to any one of or several of the preceding claims,
**characterised in that**
the frame links (17 and 18) consist of light metal and the bearing struts (33 and 34) consist of an iron-metallic material.

8. Hood frame according to any one of the preceding claims,
**characterised in that**
the retaining brackets (42) are manufactured from one piece with the roof cover (19).

9. Hood frame according to any one of the preceding claims,
**characterised in that**
the straight profile web (45) and the horizontal profile web (46) are connected to the front frame link (17) or to the roof cover (19) with arrangement of one or a plurality of screws (48 and 49).

10. Hood frame according to any one of or several of the preceding claims,
**characterised in that**
each frame link (e.g. 18) has a tube section (50) and a retaining section (51) accommodating one or a plurality of sealing bodies (52 and 53).

11. Hood frame according to claim 10,
**characterised in that**
the frame links (17 and 18) are provided with a setting (55) at least in sections viewed over their length (L).

12. Hood frame according to claim 10,
**characterised in that**
the frame links (17 and 18) run in an arc (56) viewed over their length (L).

## Revendications

1. Tige de capote pour un toit escamotable d'un véhicule automobile particulier, comprenant des bras de tige avant (17) et des bras de tige arrière (18) en profilés extrudés montés au niveau de côtés longs du toit escamotable, qui coopèrent de manière relativement mobile au niveau de zones d'extrémités (26 et 27) tournées l'une vers l'autre par l'intermédiaire de paliers de pivotement (28), lesquels bras de tige avant sont reliés de manière adjacente à une traverse supérieure (22) d'un cadre de pare-brise (7) formant une partie intégrante d'une carrosserie avec une calotte de toit (19) s'étendant transversalement à la direction longitudinale du véhicule, dans laquelle la calotte de toit et les bras de tige (17 et 18) sont en un matériau léger, dans laquelle les bras de tige avant (17) sont maintenus au niveau de la calotte de toit (19) par l'intermédiaire de premières vis (29 et 30) et les bras de tige (17 et 18) sont maintenus au niveau des zones d'extrémité (26 et 27) par le biais de leviers de palier (32 et 33) présentant les paliers de pivotement (28) fabriqués séparément desdits bras de tige (17 et 18), dans laquelle entre les bras de tige avant (17) et la calotte de toit (19) sont prévues des consoles de retenue (43), qui servent à la fixation de ces bras de tige (17) au niveau de ladite calotte de toit (19),
**caractérisée en ce**
**que** les consoles de retenue (43) comprennent respectivement un profilé angulaire (44), qui présente une branche profilée verticale (45) et une branche profilée horizontale (46), dans laquelle la branche profilée verticale (45) porte le bras de tige avant (17) correspondant, tandis que la branche profilée horizontale (46) soutient un élargissement de fixation (47) de la calotte de toit (19).

2. Tige de capote selon la revendication 1,
**caractérisée en ce**
**que** les leviers de palier (32 et 33) sont maintenus en position par l'intermédiaire de deuxièmes vis (34 et 35) et de troisièmes vis (36 et 37) au niveau des bras de tige avant (17) et des bras de tige arrière (18).

3. Tige de capote selon les revendications 1 et 2,
**caractérisée en ce**
**que** les leviers de palier (32 et 33) sont réalisés en tant que levier à deux bras.

4. Tige de capote selon la revendication 3,
**caractérisée en ce**
**que** les leviers de palier (32 et 33) présentent des bras de fixation (38) et des bras de palier (39) pour les paliers de pivotement (28).

5. Tige de capote selon les revendications 1, 3 et 4,
**caractérisée en ce**
**que** les bras de palier (39) sont coudés par rapport aux bras de fixation (38).

6. Tige de capote selon une ou plusieurs des revendications précédentes,
**caractérisée en ce**
**que** les paliers de pivotement (28), vus dans la direction de hauteur de véhicule (C-C), sont agencés au-dessus des bras de tige avant (17) et des bras de tige arrière (18).

7. Tige de capote selon une ou plusieurs des revendications précédentes,
**caractérisée en ce**
**que** les bras de tige (17 et 18) sont en métal léger et les leviers de palier (33 et 34) sont en un matériau métallique ferreux.

8. Tige de capote selon l'une quelconque des revendications précédentes,
**caractérisée en ce**
**que** les consoles de retenue (42) sont fabriquées en une seule pièce avec la calotte de toit (19).

9. Tige de capote selon l'une quelconque des revendications précédentes,
**caractérisée en ce**
**que** la branche profilée verticale (45) et la branche profilée horizontale (46) sont reliées au bras de tige avant (17) ou à la calotte de toit (19) par l'intermédiaire d'une ou plusieurs vis (48 et 49).

10. Tige de capote selon une ou plusieurs des revendications précédentes,
**caractérisée en ce**
**que** chaque bras de tige (par exemple 18) comprend une section tubulaire (50) et une section de retenue (51) recevant un ou plusieurs corps d'étanchéité (52 et 53).

11. Tige de capote selon la revendication 10,
**caractérisée en ce**
**que** les bras de tige (17 et 18) sont dotés vus sur leur longueur (L) au moins par section d'un gauchissement (55).

12. Tige de capote selon la revendication 10,
**caractérisée en ce**
**que** les bras de tige (17 et 18) s'étendent vus sur leur longueur (L) en un arc (56).
